# FASCICULE DE BREVET EUROPEEN

(11) **EP 3 039 284 B1**
(45) Date de publication et mention de la délivrance du brevet: **10.01.2018**
(21) Numéro de dépôt: 14739384.7
(22) Date de dépôt: 08.07.2014
(51) Int. Cl.: F03B 13/10, H02K 35/00, F03D 13/20, F03B 13/18

(54) **GENERATEUR D'ELECTRICITE A MEMBRANE ONDULANTE**
STROMGENERATOR MIT SCHWINGENDER MEMBRANE
ELECTRICITY GENERATOR WITH AN UNDULATING MEMBRANE

(30) Priorité: 28.08.2013 FR 1358239
(43) Date de publication de la demande: 06.07.2016
(73) Titulaire: EEL ENERGY, 75007 Paris (FR)
(72) Inventeur: DREVET, Jean Baptiste, 75005 Paris (FR)
(74) Mandataire: Parzy, Benjamin Alain
(86) Numéro de dépôt international: PCT/EP2014/064635
(87) Numéro de publication internationale: WO 2015/028182

(56) Documents cités:
- WO-A2-2012/123465
- CN-A- 102 384 013
- DE-A1-102008 050 238
- DE-A1-102009 047 232
- JP-A- 2012 237 278

## Description

L'invention concerne le domaine général des générateurs d'électricité destinés à être plongés dans un écoulement de fluide pour y capter, à l'aide d'une membrane ondulante dans l'écoulement, de l'énergie mécanique. Ce générateur est agencé pour transformer au moins une partie l'énergie mécanique qu'il capte en énergie électrique.

### ARRIERE PLAN DE L'INVENTION

Il est connu du document brevet WO2012123465A2, un générateur d'électricité comportant une membrane et un support de la membrane, la membrane étant adaptée à onduler selon une direction longitudinale de la membrane lorsqu'elle est plongée dans un fluide s'écoulant selon une direction donnée et qu'elle est supportée par le support de membrane.

Ce générateur de l'art antérieur comporte en outre plusieurs modules de génération d'électricité portés par la membrane. Chaque module de génération d'électricité comporte :
- une armature fixe ;
- une armature mobile par rapport à l'armature fixe ;
- une bobine portée par une des armatures ;
- au moins un aimant permanent également porté par une des armatures ;
- ladite bobine et ledit au moins un aimant permanent étant agencés et disposés de manière que lors du déplacement de l'armature mobile par rapport à l'armature fixe, une tension électrique apparaisse dans la bobine.

Les armatures fixes des modules de ce générateur de l'art antérieur comportent :
- soit des bras de leviers rigides fixés à la membrane et articulés entre eux pour faire pivoter des bobines par rapport à des aimants lors de l'ondulation de la membrane (dans ce mode de réalisation, les bras de leviers contraignent grandement les formes et amplitudes de l'ondulation de la membrane) ;
- soit des aimants et des bobines fixés de loin en loin le long de la membrane, ce qui limite le rendement de génération électrique.

### OBJET DE L'INVENTION

Un objet de la présente invention est d'obtenir un générateur d'électricité capable de présenter, au moins dans certaines conditions, un rendement amélioré.

### RESUME DE L'INVENTION

A cet effet, selon l'invention, il est proposéun générateur d'électricité comportant :
- une membrane et un support de la membrane, la membrane étant adaptée à onduler selon une direction longitudinale de la membrane lorsqu'elle est plongée dans un fluide s'écoulant selon une direction donnée et qu'elle est supportée par le support de membrane ;
- au moins un module de génération d'électricité porté par la membrane.

Chaque au moins un module de génération d'électricité comporte :
- une armature fixe ;
- une armature mobile par rapport à l'armature fixe ;
- une bobine portée par une des armatures ;
- au moins un aimant permanent également porté par une des armatures ;
- ladite bobine et ledit au moins un aimant permanent étant agencés et disposés de manière que lors du déplacement de l'armature mobile par rapport à l'armature fixe, un courant électrique apparaisse dans la bobine.

Le générateur selon l'invention est essentiellement caractérisé en ce que les armatures fixes des modules de génération d'électricité sont assemblées à cette membrane et les armatures mobiles sont disposées à distance d'une fibre neutre de la membrane de manière que lorsque la membrane ondule selon sa direction longitudinale, on ait pour chaque module de génération d'électricité, un déplacement par coulissement rectiligne de l'armature mobile de ce module par rapport à l'armature fixe de ce même module de manière à générer des courants électriques dans les bobines desdits modules.

L'usage de modules de génération d'électricité exclusivement portés par la membrane et reliés à cette dernière de manière à avoir pour chaque module, un coulissement rectiligne d'une armature mobile par rapport à une armature fixe à distance de la fibre neutre de membrane permet, une amplification mécanique de la vitesse de déplacement relative entre les armatures fixes et mobiles correspondantes. De ce fait, pour une ondulation donnée de la membrane, la tension électrique pouvant être générée par un module donné est amplifiée. Ainsi, au moins pour certains types d'écoulements de fluide trop lents, le rendement du générateur d'électricité selon l'invention est amélioré par rapport à des générateurs d'électricité de l'art antérieur comme ceux précités du document WO2012123465A2.

Dans les modes précités du document WO2012123465A2, toutes les armatures sont fixées directement sur la membrane et il n'y a jamais de coulissement rectiligne, à distance de la fibre neutre, entre une armature fixe et une armature mobile correspondante. Les vitesses de déplacement relatives entre ces armatures sont par conséquent plus faibles et la tension électrique pouvant être générée est réduite en conséquence.

La fibre neutre de la membrane est une courbe s'étendant le long de la membrane et placée au milieu de l'épaisseur de cette membrane. En créant une distance entre l'armature mobile et la fibre neutre de la membrane pour un angle de courbure longitudinale donné de la membrane, on augmente l'amplitude de coulissement rectiligne de l'armature mobile par rapport à l'armature fixe qui lui correspond.

En conséquence, si pour un module donné, on augmente la distance entre la fibre neutre de membrane et l'armature mobile de ce module, pour une onde donnée se propageant le long de la membrane, on constate que :
- d'une part, l'amplitude du déplacement rectiligne/linéaire de l'armature mobile par rapport à l'armature fixe est augmentée ; et que
- d'autre part, la vitesse de déplacement de l'armature mobile par rapport à l'armature fixe est aussi augmentée.

Comme la tension générée sur une bobine donnée est proportionnelle à la vitesse de déplacement / coulissement rectiligne de l'armature mobile par rapport à l'armature fixe, en augmentant la vitesse du coulissement linéaire, le module du générateur d'électricité selon l'invention permet une augmentation de la tension aux bornes de sa bobine.

Sachant que la puissance électrique fournie par une bobine est proportionnelle au carré de la tension générée par cette même bobine, l'invention, en permettant un éloignement des armatures mobiles par rapport à la fibre neutre de la membrane, augmente la puissance électrique générée par ses modules du carré de l'augmentation de la vitesse de coulissement constatée.

Ainsi, l'éloignement des directions de coulissement des armatures mobiles par rapport à la fibre neutre est particulièrement avantageux car cela permet d'augmenter la vitesse du coulissement rectiligne ce qui favorise l'apparition d'une tension électrique aux bornes des bobines et cela même si la vitesse de déplacement de l'onde dans la membrane est faible. En conséquence, le générateur selon l'invention présente un rendement amélioré pour des vitesses d'écoulement de fluide lentes.

Un autre avantage du générateur selon l'invention est qu'il permet d'augmenter la puissance électrique générée par un module donné sans avoir à augmenter pour autant la section du fil constituant sa bobine. Il suffit en effet d'augmenter la distance entre la fibre neutre de la membrane et la direction de coulissement rectiligne d'une armature mobile pour augmenter la puissance électrique produite par ce module.

Un corolaire de cet avantage est que l'invention permet dans la mesure où l'on augmente la distance entre la direction de coulissement et la fibre neutre, de diminuer la taille des modules de génération d'électricité sans forcément affecter la puissance électrique générée par le générateur dans un écoulement fluide déterminé.

Le générateur selon l'invention peut ainsi être allégé, et présenter un coût de fabrication plus faible tout en permettant, lorsque placé dans un écoulement lent, de fournir une puissance électrique avec un rendement satisfaisant. Idéalement la distance entre la fibre neutre de membrane et l'armature mobile de ce module, est supérieure ou égale à l'épaisseur de la membrane.

Dans un mode de réalisation préférentiel de l'invention, l'armature mobile d'au moins un desdits modules de génération d'électricité présente un axe d'articulation propre par lequel lui sont transmis des efforts de coulissement rectiligne de cette armature mobile par rapport à l'armature fixe de ce même module, cet axe d'articulation propre étant perpendiculaire à une direction de coulissement rectiligne de cette armature mobile par rapport à l'armature fixe du même module et la distance d'éloignement de cet axe d'articulation par rapport à une surface de la membrane en vis-à-vis de ce module est au moins égale à une fois l'épaisseur de la membrane.

Cette distance d'éloignement de l'axe d'articulation par rapport à la fibre neutre correspond à la distance entre la direction de coulissement rectiligne de l'armature mobile par rapport à l'armature fixe du module et la fibre neutre.

Plus cette distance d'éloignement entre la direction de coulissement rectiligne propre à un module et la fibre neutre est importante et plus on accélère la vitesse de coulissement de l'armature mobile par rapport à l'armature fixe. Ainsi on peut faire en sorte que cette distance d'éloignement entre la direction de coulissement et la fibre neutre soit choisie en fonction de la vitesse de l'écoulement dans lequel on veut faire fonctionner le générateur de l'invention.

Plus la vitesse de l'écoulement est faible et plus la distance d'éloignement entre la direction de coulissement et la fibre neutre est importante.

Dans un mode de réalisation préférentiel de l'invention, les modules portés par la membrane et la membrane sont tels que, au cours de l'ondulation de la membrane selon sa direction longitudinale, les directions de coulissement rectilignes de chaque armature mobile des modules sont toujours parallèles à un plan de section longitudinale A-A de la membrane dans lequel s'étend la direction longitudinale de cette membrane.

Le fait que les directions de coulissement rectiligne des modules soient toujours placées parallèles à un plan de section longitudinale de la membrane est avantageux car on améliore ainsi le transfert d'énergie entre la membrane et les modules. En effet, la membrane et les modules se déforment tous dans des directions qui sont parallèles à un même plan de section longitudinale de membrane.

Selon un mode de réalisation préférentiel de l'invention, chacun des modules de génération d'électricité présente une longueur propre qui s'étend parallèlement à un plan de section longitudinale de la membrane dans lequel se trouve ladite direction longitudinale de la membrane.

Le fait que les modules soient tous parallèles à la direction longitudinale de la membrane favorise l'écoulement du fluide le long de la membrane et améliore ainsi le rendement du dispositif.

Idéalement la longueur propre d'un module est strictement parallèle à la direction de coulissement rectiligne de l'armature mobile de ce module par rapport à son armature fixe.

Selon un mode de réalisation préférentiel de l'invention, certains au moins des modules de génération d'électricité sont alignés entre eux selon une direction d'alignement également parallèle au plan de section longitudinale de la membrane. Les modules alignés selon la direction d'alignement sont préférentiellement recouverts d'un capot s'étendant parallèlement à la direction longitudinale de la membrane.

En regroupant les modules selon un alignement parallèle au sens d'écoulement du fluide, on améliore le rendement du dispositif.

On note que les modules alignés ne sont pas forcément recouverts d'un capot, mais l'usage d'un tel capot reste préférable pour améliorer l'hydrodynamisme et éventuellement l'étanchéité des modules.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 représente une vue de côté d'un générateur d'électricité selon l'invention comportant un module de génération d'électricité exclusivement porté par la membrane ondulante du générateur ;
- la figure 2 représente une vue en coupe partielle d'une membrane mise à plat d'un générateur d'électricité selon l'invention, cette membrane portant sur une de ses faces deux modules de génération d'électricité d'un premier type ;
- la figure 3 présente un générateur d'électricité selon l'invention dont les modules de génération d'électricité sont disposés sur des faces opposées de la membrane ;
- la figure 4 présente un mode d'assemblage de modules de génération d'électricité selon lequel chaque module de génération d'électricité est lié à la membrane par deux plots, ces modules étant assemblés à la membrane selon un motif d'implantation où un premier des plots d'un premier module est placé entre des niveaux d'implantation de plots d'un second module et où le second des plots de ce même premier module est placé entre des niveaux d'implantation de plots d'un troisième module.
- La figure 5 présente une coupe partielle d'un mode particulier de réalisation d'un module de génération d'électricité pour la mise en oeuvre du générateur selon l'invention ce module ayant des aimants et des bobines portées sur des armatures distinctes du module ;
- La figure 6a présente une vue en perspective d'un mode préférentiel de réalisation d'un module de génération d'électricité selon l'invention ;
- La figure 6b présente une vue en coupe selon un plan de section longitudinale A-A du module de la figure 6a, ce plan A-A étant le plan de section longitudinale de la membrane ;
- La figure 6c présente une vue de l'armature fixe du module de génération des figures 6a et 6b ;
- La figure 6d est une vue en coupe d'une portion de membrane d'un générateur d'électricité selon l'invention, des modules de génération d'électricité sont implantés de part et d'autre de la membrane selon des alignements parallèles au plan de coupe longitudinale A-A de la membrane ;
- La figure 7 représente deux groupes de modules de génération d'électricité fixés de part et d'autre d'une bande, cette bande étant prévue pour être assemblée et placée entre des portions latérales de membrane ;
- La figure 8a présente une membrane dotée d'une bande placée entre des portions latérales de la membrane, cette bande portant un groupe de modules assemblés entre eux et formant un alignement de modules ;
- La figure 8b présente un groupe de modules de génération d'électricité assemblés entre eux selon un alignement et portés par une bande de membrane.

### DESCRIPTION DETAILLEE DE L'INVENTION

Comme indiqué précédemment, l'invention concerne essentiellement un générateur d'électricité 1 doté d'une membrane 7 adaptée à onduler dans un écoulement de liquide F. Ce générateur d'électricité 1 est une hydrolienne qui au moins dans certains modes de réalisation peut fonctionner avec un écoulement fluide liquide lent, c'est-à-dire inférieur à 1 mètre par seconde. Le générateur d'électricité 1 comporte un support 8 de membrane 7 doté de moyens d'ancrage 22 du générateur 1 pour le fixer dans son environnement et éviter sa dérive dans l'écoulement de fluide F.

Le support 22 présente des moyens d'accroche amont 23 reliés à plus grande proximité d'un bord amont 7a de membrane 7 que d'un bord aval 7b de la membrane 7 placée l'écoulement F. Sous l'effet de cet écoulement, la membrane ondule par rapport au support 8.

Idéalement, le support 8 présente des moyens d'accroche aval placés en aval des moyens d'accroche amont. Ces moyens d'accroche aval (non représentés) sont agencés pour empêcher que la membrane ne se tende selon sa direction longitudinale D et pour forcer la membrane à se courber. En d'autres termes la distance entre les moyens d'accroche amont 23 et les moyens d'accroche aval est inférieure à la longueur de la membrane tendue dans un plan.

On note que la direction longitudinale D de la membrane est un axe s'étendant entre un bord amont 7a et un bord aval 7b de la membrane 7.

Comme la membrane 7 est toujours maintenue courbée, dès lors qu'elle est placée dans un écoulement F, on a, à l'endroit de la courbure de membrane, une face de la membrane qui forme un obstacle à l'écoulement du fluide F. On a alors un différentiel de pression de part et d'autre de la membrane qui pousse la membrane à changer de courbure. Ce changement de courbure est permanent dès lors qu'il y a un écoulement F et ce phénomène favorise l'ondulation de la membrane 7 dans l'écoulement F.

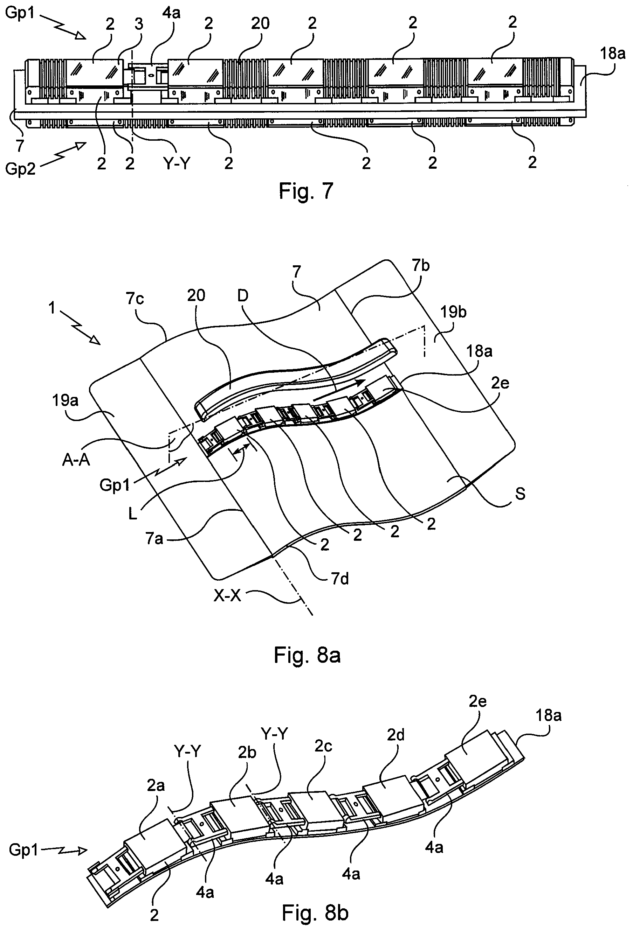

Le support de membrane 8 peut, comme représenté à la figure 8, présenter des butées angulaires pour limiter de débattement angulaire des moyens d'accroche 23 autour d'un axe de pivotement fixe. La membrane est articulée aux moyens d'accroche 23 au niveau de son bord d'attaque 7a. Ce bord d'attaque 7a peut ainsi être déplacé d'une part par rotation du moyen d'accroche 23 par rapport à l'axe de pivotement fixe Fx et par rotation autour de l'articulation Fy qui la relie aux moyens d'accroche 23. L'axe de pivotement Fx et l'articulation sont selon des axes de pivotement parallèles entre eux et préférentiellement horizontaux. Ces axes de pivotement Fx et Fy sont perpendiculaires direction longitudinale D de la membrane 7, parallèles au bord amont 7a de la membrane 7 et perpendiculaires au plan de section longitudinale de membrane A-A.

La membrane 7 comporte idéalement une ou plusieurs bandes 18a, 18b s'étendant parallèlement à la direction longitudinale D de la membrane 7. Chaque au moins une bande 18a, 18b est agencée pour rigidifier localement la membrane tout en lui permettant d'onduler dans l'écoulement F.

Des modules 2 de génération d'électricité décrits ci-après sont assemblés à la membrane préférentiellement à des endroits de la membrane qui comportent une bande 18a, 18b. Ainsi, la membrane 7 à moins tendance à se déformer sous l'effet d'une résistance mécanique appliquée par les modules 2 sur la membrane 7. On améliore ainsi le transfert d'énergie de la membrane 7 vers ces modules 2.

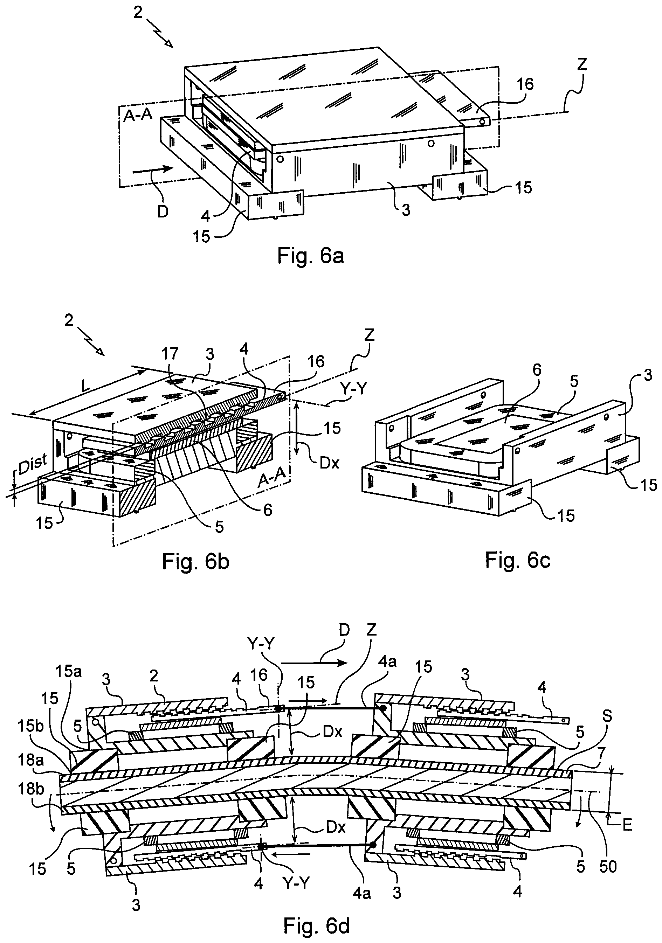

Typiquement, les modules de génération d'électricité 2 sont groupés selon un/des groupes de modules Gp1 et/ou Gp2. Les modules d'un même groupe sont préférentiellement alignés entre eux, c'est-à-dire qu'ils s'étendent tous dans un même plan de section longitudinale A-A de la membrane. Comme on le voit sur la figure 6d chaque groupe Gp1, Gp2 de modules 2 peut être assemblé le long d'une bande de la membrane 18a, 18b qui lui correspond. Les bandes 18a, 18b sont sur des côtés opposés de la membrane qui comporte une âme centrale sur laquelle sont collées les bandes 18a, 18b.

Alternativement, comme on le voit sur les modes des figures 7, 8a et 8b, les groupes de modules alignés Gp1, Gp2 sont tous assemblés de part et d'autre d'une seule et même bande de la membrane 18a appartenant à la membrane 7.

La /les bande(s) 18a, 18b est/sont préférentiellement placée(s) dans le plan de symétrie longitudinale de la membrane A-A, à équidistance de ses bords latéraux 7c, 7d. En alignant ainsi les modules 2, on améliore le glissement du fluide sur les modules, par rapport au cas où un ou plusieurs de ces modules seraient disposés non parallèles au plan de section longitudinale A-A et par conséquent non parallèles à la direction de l'écoulement F.

Le rendement du générateur 1 est ainsi préservé car on limite l'impact des modules 2 sur l'écoulement moteur de l'ondulation.

Idéalement, la membrane 7 comporte des panneaux déflecteurs amont et aval 19a, 19b. Le panneau amont 19a s'étend parallèlement à un bord amont 7a, dit bord d'attaque. Le panneau aval 19b s'étend parallèlement à un bord aval 7b, dit bord de fuite, de la membrane 7. Préférentiellement, chaque au moins une bande 18a, 18b rejoint ces panneaux déflecteurs amont et aval 19a, 19b de manière qu'un pivotement de l'un quelconque de ces panneaux 19a, 19b autour d'un axe de pivotement X-X perpendiculaire au plan de section longitudinale A-A, génère une flexion longitudinale de la bande 18a, 18b, au moins à proximité de la liaison de la bande 18a, 18b avec le panneau 19a, 19b ainsi pivoté.

On note que les modules 2 d'un même groupe de modules Gp1, Gp2 peuvent être enfermés dans un bloc élastomère étanche 20, par exemple réalisé par surmoulage des modules assemblés entre eux. Un tel capot 20 améliore l'hydrodynamisme des modules et favorise encore le rendement du générateur d'électricité 1.

Ce capot 20 représenté aux figures 7 et 8a est étanche et souple. Des portions du capot 20 placées entre deux modules adjacents 2 et alignés entre eux peuvent comporter des soufflets en accordéon 21 agencés pour augmenter localement la souplesse du capot 20. De tels soufflets 21 sont visibles à la figure 7.

Dans chacun des modes de réalisation du générateur 1 selon l'invention, la membrane 7 porte un ou plusieurs modules de génération d'électricité 2.

Chaque module de génération d'électricité 2 comporte :
- une armature fixe 3 ;
- une armature mobile 4 par rapport à l'armature fixe 3 ;
- une bobine 5 portée par une des armatures 3, 4 ;
- au moins un aimant permanent 6 également porté par une des armatures 3, 4.

La bobine 5 et l'aimant permanent 6 sont agencés et disposés par rapport aux armatures du module 2 de manière que lors du déplacement selon un coulissement rectiligne de l'armature mobile 4 de ce module 2 par rapport à l'armature fixe 3 de ce module 2 on ait une tension électrique qui apparaisse dans la bobine 5 du module 2. Si cette bobine est reliée à un dipôle conducteur, elle génère à la fois courant et une tension électrique.

Le générateur 1 est en outre caractérisé en ce que les armatures fixes 3 des modules de génération d'électricité 2 sont assemblées à la membrane 7 qui les porte de manière que chaque armatures mobiles 4 soit disposée à distance d'une fibre neutre 50 de la membrane 7 et de manière que lorsque la membrane 7 ondule selon sa direction longitudinale D, on ait pour chaque module de génération d'électricité 2, un déplacement par coulissement rectiligne Z de l'armature mobile 4 de ce module 2 par rapport à l'armature fixe 3 de ce même module 2.

Chaque module est ainsi déformable selon une direction de coulissement rectiligne Z de son armature mobile 4 par rapport à son armature fixe 3.

Les modules 2 sont assemblés à la membrane de manière que lorsque la membrane ondule selon sa direction longitudinale, elle force chaque module 2 à se déformer alternativement selon une direction de coulissement rectiligne Z propre au module et à ainsi générer une tension électrique sur sa bobine.

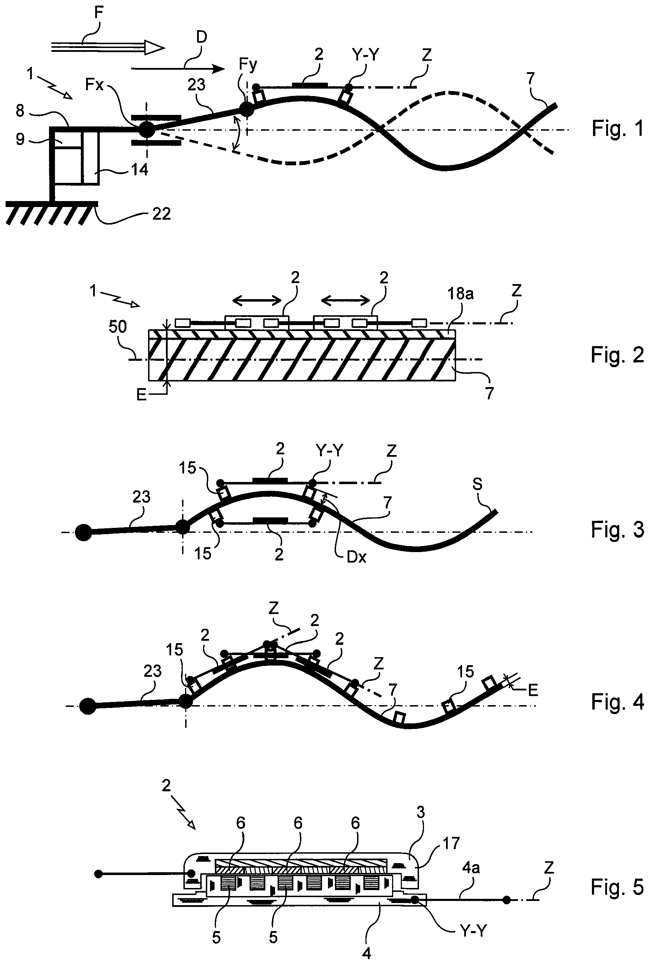

Dans les modes de réalisation des modules représentés aux figures 1 à 8b, chaque module de génération d'électricité 2 présente une direction de coulissement rectiligne Z qui lui est propre. Cette direction de coulissement Z passe par un axe d'articulation Y-Y par lequel sont transmis les efforts de coulissement de l'armature mobile 4 par rapport à l'armature fixe 3.

Préférentiellement, les armatures fixes 3 sont assemblées à la membrane 7 par l'intermédiaire de plots élastiques 15 déformables pour permettre un déplacement relatif entre un point d'assemblage 15a d'armature fixe avec un plot élastique 15 qui lui correspond et un point d'assemblage 15b de ce même plot élastique 15 avec la membrane 7.

L'avantage des plots 15 est tel que lorsque la membrane se déforme, de l'énergie mécanique est alors transmise via les plots élastiques 15 aux modules de génération d'électricité 2. Les plots 15 réalisent un lissage de l'énergie maximale transmise aux modules 2 car ils ont tendance à s'allonger/ se compresser élastiquement au moment des pics d'efforts de traction / compression des plots. On limite ainsi les efforts instantanés transmis entre la membrane et les modules 2 tout en permettant une accumulation d'énergie mécanique par déformation élastique des plots 15. Cette énergie ainsi accumulée dans les plots 15 peut être délivrée aux modules de manière progressive ce qui favorise l'étalement dans le temps de la plage de production de courant au niveau de chaque bobine.

On peut aussi faire en sorte que l'armature mobile 4 soit aussi reliée à la membrane :
- soit directement, comme c'est par exemple le cas sur les modes de réalisation des figures 1, 3, 4, à l'aide de plot élastique 15, sur lequel l'armature mobile est articulée selon un axe d'articulation Y-Y;
- soit indirectement comme c'est par exemple le cas sur les modes de réalisation des figures 2, 6d, 7, 8a, 8b, via une pièce articulée à ses extrémités 4a qui relie l'armature mobile 4 à une armature fixe 3 d'un autre module 2, cet autre module 2 étant luimême fixé à la membrane via un plot 15 qui lui est propre.

Dans les modes de réalisation des figures 2, 6d, 7, 8a, 8b, certains au moins des modules 2 forment un premier groupe de modules alignés Gp1 le long d'une première face S de membrane et éventuellement certains autres modules 2 forment un second groupe de modules alignés Gp2 le long d'une seconde face de membrane. Ces alignements sont parallèles à la direction D. Les modules 2 appartenant à un groupe de modules alignés Gp1, Gp2 sont reliés entre eux de manière qu'une armature mobile 4 d'un module donné 2 de ce groupe de modules Gp1 soit reliée mécaniquement à une armature fixe 3 d'un autre module donné 2 de ce groupe Gp1. Cette liaison est telle que le déplacement relatif des armatures fixes 3 de deux modules donnés 2 ainsi reliés entre eux, entraine, pour l'un de ces modules reliés entre eux, le déplacement de son armature mobile 4 par rapport à son armature fixe 3.

Chaque liaison mécanique entre une armature mobile 4 d'un module donné 2 et une armature fixe 3 d'un autre module donné 2 est réalisée à l'aide d'une pièce articulée 4a. La pièce 4a est articulée d'une part avec l'armature fixe 3 d'un module 2 et d'autre part avec l'armature mobile 4 d'un autre module. Cette pièce 4a peut être en forme de H de manière à monter en chape chacune des armatures 3, 4 qu'elle relie entre elles.

Chacune des pièces articulées 4a reliant une armature fixe 3 d'un module à une armature mobile 4 d'un autre module s'étend également dans le plan de section longitudinale A-A de la membrane 7 dans lequel s'étend la direction longitudinale D de cette membrane 7.

Comme on le voit en particulier sur les figures 6d, 7, 8a et 8b, chaque pièce 4a est liée à une armature mobile 4 par un axe d'articulation Y-Y perpendiculaire au plan de section longitudinale de la membrane A-A. Chaque pièce 4a présente une autre extrémité articulée avec une armature fixe d'un module, cette articulation étant selon un second axe d'articulation parallèle par rapport à l'axe d'articulation Y-Y.

La membrane 7 qui ondule et se déforme génère des efforts de coulissement rectiligne de l'armature mobile 4. Ces efforts sont transmis à l'armature mobile 4 via la pièce 4a qui lui est articulée selon l'axe d'articulation Y-Y. Chaque axe Y-Y est perpendiculaire à la direction de coulissement rectiligne Z de l'armature mobile 4 à laquelle il est relié. Comme illustré en particulier aux figures 6b et 6d, une distance d'éloignement Dx de cet axe d'articulation Y-Y par rapport à une surface S de la membrane permet l'éloignement de la direction de coulissement rectiligne Z par rapport à la fibre neutre 50 de la membrane. Cette distance d'éloignement Dx est au moins égale à une fois l'épaisseur E de la membrane 7. Idéalement la distance d'éloignement du second axe d'articulation de la pièce 4a par rapport à la fibre neutre est aussi supérieure à une fois l'épaisseur E de membrane 7.

Comme on le voit en particulier sur la figure 6d, la flexion de la membrane 7 selon des axes de flexion perpendiculaires à son plan de section longitudinale A-A génère un déplacement de la pièce 4a, ce déplacement étant d'autant plus important que les axes d'articulation de la pièce 4a sont éloignés de la fibre neutre 50 de la membrane. Ainsi, la distance Dx entre la face de membrane en vis-à-vis de l'armature mobile et l'axe Y-Y détermine l'amplification du mouvement de coulissement en fonction de l'angle de flexion de la membrane.

Cette distance Dx d'amplification est choisie pour être importante lorsque le générateur est destiné à avoir une vitesse d'ondulation lente. Inversement, cette distance Dx d'amplification est choisie pour être faible lorsque le générateur 1 est destiné à avoir une vitesse d'ondulation rapide.

Comme on le voit sur les figures 6b, 6c et 6d, l'armature fixe 3 d'un module 2 porte une bobine 5 et ledit au moins un aimant permanent 6 de ce même module. L'armature mobile 4 comporte un fer 16 se déplaçant face audit au moins un aimant 6 lorsque la membrane 7 ondule selon sa direction D. Le fer 16 présente une forme telle que lors de ce déplacement du fer 16 par rapport à l'aimant 6, on a une distance Dist d'entre fer mesurée entre le fer 16 et un contrefer 17 porté par l'armature fixe 3 qui varie de manière alternative.

La distance d'entre fer Dist est la distance minimale, mesurée selon une direction fixe par rapport à l'aimant, qui sépare le fer d'un endroit donné fixe d'un contrefer porté par l'armature fixe 3. Le contrefer 17 est toute pièce placée face au fer de l'armature mobile et telle que lors du coulissement du fer 16 de l'armature mobile 4 par rapport au contrefer 17, on ait une distance d'entrefer Dist mesurée entre un point du contrefer 17 et le fer 16 qui varie de manière alternative entre des distances minimale et maximale. L'endroit de la mesure de la distance Dist est face à l'aimant 6 et selon une direction passant préférentiellement par des pôles nord/sud de l'aimant 6.

Le contrefer 17 est une pièce métallique par laquelle passe un champ magnétique généré par l'aimant 6.

Comme représenté aux figures 6b, 6d, l'armature fixe 3 peut être formée pour entourer l'armature mobile 4 qui coulisse ainsi dans l'armature fixe 3. L'aimant 6 et le contrefer 17 sont assemblés à l'armature fixe 2 et sont respectivement placés de part et d'autre de l'armature mobile 4. L'aimant 6 forme avec le contrefer 17, une sorte de tube dans lequel coulisse l'armature mobile 4, ce qui permet d'avoir des lignes de champ magnétique de l'aimant 6 qui sortent d'un pôle, sur un côté de l'aimant 6, suivent les côtés du tube et reviennent vers un autre pôle de l'aimant 6, sur un autre côté de l'aimant 6. Le contrefer 17 présente un profil tel qu'il existe une distance irrégulière entre ce contrefer et un plan de coulissement de l'armature mobile 4. Ce plan de coulissement passe par l'ace Y-Y. Typiquement, le contrefer 17 présente une forme en créneaux.

De même, l'armature mobile 4 présente un profil de fer tel qu'il existe une distance irrégulière entre ce fer 16 et le plan de coulissement de l'armature mobile 4.

Typiquement, les profils du fer 16 et du contrefer 17 sont en formes de créneaux. Les portions hautes des créneaux du contrefer 17 sont en vis-à-vis les unes des autres et sont alignées parallèlement au plan de coulissement de l'armature mobile 4. Ces profils en créneaux présentent des pas identiques et préférentiellement une profondeur de créneaux unique et identique pour ces deux profils. Les creux des créneaux s'étendent parallèlement aux axes d'articulation Y-Y.

Les portions hautes en créneaux de l'armature mobile 4 sont aussi alignées parallèlement au plan de coulissement de l'armature mobile 4.

Ainsi, lors du coulissement de l'armature mobile 4, la distance d'entrefer Dist varie de manière alternative en passant tour à tour entre :
- une distance minimale d'entrefer, mesurée entre une partie haute de l'armature mobile 4 et une partie haute du contrefer 17, lorsque ces parties hautes sont en vis-à-vis l'une de l'autre ; et
- une distance maximale d'entrefer, mesurée entre une partie en creux des créneaux de l'armature mobile 4 et une partie en creux des créneaux du contrefer 17, lorsque ces parties en creux sont en vis-à-vis l'une de l'autre.

Bien que le contrefer 17 présenté sur les figures 6a à 6d soit toujours placé d'un côté du fer 16 qui est opposé par rapport au côté du fer 16 en vis-à-vis de l'aimant 6, on peut aussi avoir un contrefer 17 placé entre l'aimant 6 et l'armature mobile 4. Dans certains modes de réalisation, on peut aussi avoir un contrefer 17 de part et d'autre de l'armature mobile 4. Dans tous les cas, le contrefer 17 et le fer 16 présentent chacun des profils irréguliers pour que la distance minimale Dist qui les sépare, mesurée à un endroit du contrefer 17, varie toujours de manière alternative lors du déplacement du fer 16 de l'armature mobile 4 par rapport au contrefer 17 de l'armature fixe 3.

Comme dans le mode des figures 6b, 6c et 6d, la bobine 5 du module 2 entoure l'aimant 6 du module, en générant une ondulation de la membrane 7, on génère un déplacement du fer 16 par rapport au contrefer 17 et on force alors une variation dans le temps de la distance d'entrefer Dist. Cette variation de distance d'entrefer Dist crée une variation du flux magnétique traversant la bobine 5, induisant ainsi une tension électrique dans la bobine. Le fer 16 et le contrefer 17 sont en matériau (x) ferromagnétique(s) ce qui permet d'influencer le flux magnétique qui les traverse et ainsi créer une variation de flux dans la bobine 5.

Dans le mode alternatif présenté à la figure 5, les aimants 16 et les bobines 5 sont portés par des armatures distinctes. On note qu'il est possible qu'un module porte plusieurs aimants et/ou plusieurs bobines répartis sur ses armatures.

Enfin, comme représenté à la figure 1, le générateur selon l'invention peut comporter au moins un circuit convertisseur 9 distant des modules 2. Certaines au moins des bobines 5 des modules 2 étant reliées électriquement au circuit convertisseur 9 distant par l'intermédiaire de conducteurs d'électricité et ledit au moins un circuit convertisseur distant 9 étant agencé pour, à partir des tensions électriques générées par une partie au moins des bobines 5 qui lui sont reliées, générer un courant électrique de sortie au niveau de bornes de sortie de cet au moins un circuit convertisseur distant 9.

L'usage d'un tel circuit convertisseur 9 relié à plusieurs bobines 5 permet au générateur d'électricité 1 de continuer à fonctionner même si certaines des bobines qui sont reliées au convertisseur 9 sont devenues défectueuses. On améliore ainsi la résistance du générateur 1 qui peut continuer à fonctionner en mode dégradé, sans pour autant nécessiter une opération de maintenance.

Chaque au moins un circuit convertisseur 9 est disposé à distance de la membrane 7 de manière à pouvoir rester immobile par rapport à la membrane ondulante 7. On limite ainsi le risque de dégradation du circuit convertisseur 9 qui reste fixe et n'ondule pas avec la membrane. On facilite aussi les interventions de maintenance sur ce circuit convertisseur fixe.

Un autre avantage de ce circuit convertisseur 9 est qu'il permet de cumuler de l'énergie électrique provenant de plusieurs bobines pour délivrer une puissance électrique supérieure aux puissances électriques individuellement produites par les bobines 5.

Les convertisseurs 2 peuvent être agencés sur la membrane selon plusieurs motifs. Par exemple ils peuvent être disposés sur une seule face ou sur les deux faces de la membrane. Dans le cas où les convertisseurs 2 sont disposés sur des faces opposées de la membrane, ils seront préférentiellement alignés dans des plans parallèles au plan de section longitudinale A-A de membrane et seront répartis symétriquement par rapport à un plan A-A s'étendant à équidistance des côtés 7c, 7d de la membrane.

On peut par exemple avoir plusieurs alignements de modules répartis sur une ou plusieurs faces de la membrane.

Préférentiellement, comme représenté sur la figure 3, lorsque les modules sont implantés sur des faces opposées de la membrane, on fait en sorte qu'un module disposé le long d'une face soit placé en regard d'un autre module se trouvant sur l'autre face de la membrane. Ceci permet d'une part d'équilibrer la membrane et d'autre part d'avoir à chaque instant de l'ondulation, un module fonctionnant en extension et un module fonctionnant en rétraction.

Comme illustré à la figure 4, lorsque des modules sont implantés sur une même face de la membrane, on peut faire en sorte que ces modules soient implantés en quinconce pour avoir leurs assemblages avec la membrane répartis selon un pas réduit d'assemblage inférieur à la longueur maximale L de ces modules. Cette caractéristique permet d'avoir collecte d'énergie mécanique de la membrane plus homogène.

On note que cette disposition en quinconce peut être sur une ou sur les deux faces de la membrane.

Il est également possible que les bobines soient reliées pour générer des courants multi-phases. On peut également avoir plusieurs bobines par module.

## Revendications

1. Générateur d'électricité (1) comportant :
- une membrane (7) et un support de la membrane (8), la membrane (7) étant adaptée à onduler selon une direction longitudinale (D) de la membrane (7) lorsqu'elle est plongée dans un fluide (F) s'écoulant selon une direction donnée et qu'elle est supportée par le support de membrane (8) ;
- au moins un module de génération d'électricité (2) porté par la membrane, chaque au moins un module de génération d'électricité (2) comportant :
- une armature fixe (3) ;
- une armature mobile (4) par rapport à l'armature fixe (3) ;
- une bobine (5) portée par une des armatures (3, 4) ;
- au moins un aimant permanent (6) également porté par une des armatures (3, 4) ;
- ladite bobine (5) et ledit au moins un aimant permanent (6) étant agencés et disposés de manière que lors du déplacement de l'armature mobile (4) par rapport à l'armature fixe (3), une tension électrique apparaisse dans la bobine (5) ;
le générateur (1) étant en outre **caractérisé en ce que** les armatures fixes (3) des modules de génération d'électricité (2) sont assemblées à cette membrane (7) et les armatures mobiles (4) sont disposées à distance d'une fibre neutre (50) de la membrane (7) de manière que lorsque la membrane (7) ondule selon sa direction longitudinale (D), on ait pour chaque module de génération d'électricité (2), un déplacement par coulissement rectiligne de l'armature mobile (4) de ce module (2) par rapport à l'armature fixe (3) de ce même module (2) de manière à générer des tensions électriques dans les bobines (5) desdits modules (2).

2. Générateur selon la revendication 1, dans lequel, l'armature mobile (4) d'au moins un desdits modules de génération d'électricité (2) présente un axe d'articulation (Y-Y) propre par lequel lui sont transmis des efforts de coulissement rectiligne de cette armature mobile (4) par rapport à l'armature fixe (3) de ce même module (2), cet axe d'articulation (Y-Y) propre étant perpendiculaire à une direction de coulissement rectiligne (Z) de cette armature mobile (4) par rapport à l'armature fixe (3) du même module (2) et la distance d'éloignement (Dx) de cet axe d'articulation (Y-Y) par rapport à une surface (S) de la membrane en vis-à-vis de ce module (2) est au moins égale à une fois l'épaisseur (E) de la membrane (7).

3. Générateur (1) selon la revendication 2, dans lequel, au cours de l'ondulation de la membrane (7) selon sa direction longitudinale (D), les directions de coulissement rectilignes (Z) de chaque armature mobile (4) des modules (2) sont toujours parallèles à un plan de section longitudinale (A-A) de la membrane (7) dans lequel s'étend la direction longitudinale (D) de cette membrane (7).

4. Générateur (1) selon l'une quelconque des revendications précédentes, dans lequel certains au moins des modules de génération d'électricité (2) forment un groupe de modules alignés (Gp1, Gp2), les modules de génération d'électricité (2) appartenant à ce groupe de modules sont reliés entre eux de manière qu'une armature mobile (4) d'un module donné (2) de ce groupe de modules (Gp1, Gp2) soit reliée mécaniquement à une armature fixe (3) d'un autre module donné (2) de ce groupe (Gp1, Gp2), cette liaison étant telle que le déplacement relatif des armatures fixes (3) de deux modules donnés (2) ainsi reliés entre eux entraine, pour l'un de ces modules reliés entre eux, le déplacement de son armature mobile (4) par rapport à son armature fixe (3).

5. Générateur selon la revendication 4, dans lequel chaque liaison mécanique entre une armature mobile d'un module donné et une armature fixe d'un autre module donné est réalisée à l'aide d'une pièce articulée (4a) de part et d'autre avec les armatures fixe (3) et mobile (4) qu'elle relie entre elles.

6. Générateur selon l'une quelconque des revendications 1 à 5, comportant au moins un circuit convertisseur (9) distant des modules (2), certaines au moins des bobines (5) des modules (2) étant reliées électriquement au circuit convertisseur (9) distant par l'intermédiaire de conducteurs d'électricité et ledit au moins un circuit convertisseur distant (9) étant agencé pour, à partir des tensions électriques générées par une partie au moins des bobines (5) qui lui sont reliées, générer un courant électrique de sortie au niveau de bornes de sortie de cet au moins un circuit convertisseur distant (9).

7. Générateur selon l'une quelconque des revendications précédentes, dans lequel les armatures fixes (3) sont assemblées à la membrane (7) par l'intermédiaire de plots élastiques (15) déformables pour permettre un déplacement relatif entre un point d'assemblage (15a) d'armature fixe avec un plot élastique (15) qui lui correspond et un point d'assemblage (15b) de ce même plot élastique (15) avec la membrane (7).

8. Générateur selon l'une quelconque des revendications précédentes, dans lequel l'armature fixe (3) dudit au moins un module de génération d'électricité (2) porte la bobine (5) et ledit au moins un aimant permanent (6) de ce module de génération (2), son armature mobile (4) comportant un fer (16) se déplaçant face audit au moins un aimant (6) lorsque la membrane (7) ondule selon sa direction longitudinale (D), le fer (16) présentant une forme telle que lors de ce déplacement du fer (16) par rapport à l'aimant (6), on ait une distance (Dist) d'entre fer mesurée entre le fer (16) et un contrefer (17) porté par l'armature fixe (3) qui varie de manière alternative.

9. Générateur d'électricité selon l'une quelconque des revendications précédentes, dans lequel chacun des modules de génération d'électricité (2) présente une longueur propre (L) qui s'étend parallèlement à un plan de section longitudinale (A-A) de la membrane (7) dans lequel se trouve ladite direction longitudinale (D) de la membrane (7).

10. Générateur selon la revendication précédentes, dans lequel certains au moins des modules (2) sont alignés entre eux selon une direction d'alignement également parallèle au plan de section longitudinale de la membrane (A-A), les modules (2) alignés selon la direction d'alignement étant recouverts d'un capot (20) s'étendant parallèlement à la direction longitudinale (D) de la membrane (7).

## Patentansprüche

1. Stromgenerator (1), umfassend:
- eine Membran (7) und einen Membranträger (8), wobei die Membran (7) dazu geeignet ist, sich in einer Längsrichtung (D) der Membran (7) zu wellen, wenn sie in ein Fluid (F) getaucht wird, das in einer gegebenen Richtung fließt, und wenn sie von dem Membranträger (8) getragen wird;
- mindestens ein Stromerzeugungsmodul (2), das von der Membran getragen wird, wobei jedes mindestens eine Stromerzeugungsmodul (2) umfasst:
- einen ortsfesten Anker (3);
- einen in Bezug auf den ortsfesten Anker (3) beweglichen Anker (4);
- eine Spule (5), die von einem der Anker (3, 4) getragen wird;
- mindestens einen Dauermagneten (6), der ebenfalls von einem der Anker (3, 4) getragen wird;
- wobei die genannte Spule (5) und der genannte mindestens eine Dauermagnet (6) so ausgebildet und angeordnet sind, dass während der Bewegung des beweglichen Ankers (4) in Bezug auf den ortsfesten Anker (3) eine elektrische Spannung in der Spule (5) auftritt;
wobei der Generator (1) ferner **dadurch gekennzeichnet ist, dass** die ortsfesten Anker (3) der Stromerzeugungsmodule (2) an dieser Membran (7) montiert sind und die beweglichen Anker (4) mit Abstand zu einer neutralen Faser (50) der Membran (7) angeordnet sind, derart, dass, wenn sich die Membran (7) in ihrer Längsrichtung (D) wellt, man für jedes Stromerzeugungsmodul (2) eine Bewegung durch geradliniges Verschieben des beweglichen Ankers (4) dieses Moduls (2) in Bezug auf den ortsfesten Anker (3) dieses selben Moduls (12) hat, derart, dass in den Spulen (5) der genannten Module (2) elektrische Spannungen erzeugt werden.

2. Generator nach Anspruch 1, bei dem der bewegliche Anker (4) mindestens eines der genannten Stromerzeugungsmodule (2) eine eigene Gelenkachse (Y-Y) aufweist, durch die ihm Kräfte zur geradlinigen Verschiebung dieses beweglichen Ankers (4) in Bezug auf den ortsfesten Anker (3) dieses selben Moduls (2) übertragen werden, wobei diese eigene Gelenkachse (Y-Y) senkrecht zu einer geradlinigen Verschiebungsrichtung (Z) dieses beweglichen Ankers (4) in Bezug auf den ortsfesten Anker (3) desselben Moduls (2) ist und der Entfernungsabstand (Dx) dieser Gelenkachse (Y-Y) in Bezug auf eine Oberfläche (S) der Membran gegenüber dieses Moduls (2) mindestens gleich einer einmaligen Dicke (E) der Membran (7) ist.

3. Generator (1) nach Anspruch 2, bei dem während der Wellenbewegung der Membran (7) in ihrer Längsrichtung (D) die geradlinigen Verschiebungsrichtungen (Z) jedes beweglichen Ankers (4) der Module (2) immer parallel zu einer Längsschnittebene (A-A) der Membran (7) sind, in der sich die Längsrichtung (D) dieser Membran (7) erstreckt.

4. Generator (1) nach einem der vorhergehenden Ansprüche, bei dem zumindest einige der Stromerzeugungsmodule (2) eine Gruppe (Gp1, Gp2) von ausgerichteten Modulen bilden, wobei die Stromerzeugungsmodule (2), die zu dieser Gruppe von Modulen gehören, miteinander derart verbunden sind, dass ein beweglicher Anker (4) eines gegebenen Moduls (2) dieser Modulgruppe (Gp1, Gp2) mechanisch mit einem ortsfesten Anker (3) eines anderen gegebenen Moduls (2) dieser Gruppe (Gp1, Gp2) verbunden ist, wobei diese Verbindung derart ist, dass die relative Bewegung der ortsfesten Anker (3) von zwei gegebenen Modulen (2), die so miteinander verbunden sind, für eines dieser miteinander verbundenen Module die Bewegung seines beweglichen Ankers (4) in Bezug auf seinen ortsfesten Anker (3) verursacht.

5. Generator nach Anspruch 4, bei dem jede mechanische Verbindung zwischen einem beweglichen Anker eines gegebenen Moduls und einem ortsfesten Anker eines anderen gegebenen Moduls mit Hilfe eines Teils (4a) hergestellt ist, das auf der einen Seite gelenkig mit dem ortsfesten Anker und auf der anderen Seite gelenkig mit dem beweglichen Anker (4) verbunden ist, die es miteinander verbindet.

6. Generator nach einem der Ansprüche 1 bis 5, umfassend mindestens eine Wandlerschaltung (9), die von den Modulen (2) entfernt ist, wobei zumindest einige der Spulen (5) der Module (2) über Stromleiter elektrisch mit der entfernten Wandlerschaltung (9) verbunden sind und wobei die mindestens eine entfernte Wandlerschaltung (9) so ausgebildet ist, dass sie anhand von elektrischen Spannungen, die von mindestens einem Teil der Spulen (5), die mit ihr verbunden sind, erzeugt werden, einen Ausgangsstrom im Bereich von Ausgangsklemmen dieser mindestens einen entfernten Wandlerschaltung (9) erzeugt.

7. Generator nach einem der vorhergehenden Ansprüche, bei dem die ortsfesten Anker (3) an der Membran (7) über verformbare elastische Klötze (15) angebracht sind, um eine relative Bewegung zwischen einem Montagepunkt (15a) zur Montage des ortsfesten Ankers an einem elastischen Klotz (15), der ihm entspricht, und einem Montagepunkt (15b) zur Montage dieses selben elastischen Klotzes (15) an der Membran (7) zu gestatten.

8. Generator nach einem der vorhergehenden Ansprüche, bei dem der ortsfeste Anker (3) des genannten mindestens einen Stromerzeugungsmoduls (2) die Spule (5) und den genannten mindestens einen Dauermagneten (6) dieses Erzeugungsmoduls (2) trägt, wobei sein beweglicher Anker (4) ein Eisen (16) umfasst, das sich vor dem genannten mindestens einen Magneten (6) bewegt, wenn sich die Membran (7) in ihrer Längsrichtung (D) wellt, wobei das Eisen (16) eine solche Form aufweist, dass man während dieser Bewegung des Eisens (16) in Bezug auf den Magneten (6) einen zwischen dem Eisen (16) und einem von dem ortsfesten Anker (3) getragenen Gegeneisen (17) gemessenen Luftspaltabstand (Dist) hat, der sich abwechselnd ändert.

9. Stromgenerator nach einem der vorhergehenden Ansprüche, bei dem jedes der Stromerzeugungsmodule (2) eine Eigenlänge (L) aufweist, die sich parallel zu einer Längsschnittebene (A-A) der Membran (7) erstreckt, in der sich die genannte Längsrichtung (D) der Membran (7) befindet.

10. Generator nach dem vorhergehenden Anspruch, bei dem zumindest einige der Module (2) zueinander in einer Ausrichtungsrichtung ausgerichtet sind, die ebenfalls parallel zur Längsschnittebene (A-A) der Membran ist, wobei die gemäß der Ausrichtungsrichtung ausgerichteten Module (2) von einer Abdeckung (20) abgedeckt sind, die sich parallel zur Längsrichtung (D) der Membran (7) erstreckt.

## Claims

1. An electricity generator (1) comprising:
- a membrane (7) and a support (8) for the membrane, the membrane (7) being adapted to undulate in a longitudinal direction (D) of the membrane (7) when it is immersed in a fluid (F) flowing in a given direction and is supported by the membrane support (8);
- at least one electricity generation module (2) carried by the membrane, each at least one electricity generation module (2) comprising:
- a fixed frame (3);
- a frame (4) able to move with respect to the fixed frame (3);
- a coil (5) carried by one of the frames (3, 4);
- at least one permanent magnet (6) also carried by one of the frames (3, 4);
- said coil (5) and said at least one permanent magnet (6) being arranged and disposed so that, when the movable frame (4) moves with respect to the fixed frame (3), an electrical voltage appears in the coil (5);
the generator (1) further being **characterised in that** the fixed frames (3) of the electricity generation modules (2) are connected to this membrane (7) and the movable frames (4) are disposed at a distance from a neutral axis (50) of the membrane (7) so that, when the membrane (7) undulates in its longitudinal direction (D), there is, for each electricity generation module (2), a movement of the movable frame (4) of this module (2) by rectilinear sliding with respect to the fixed frame (3) of this same module (2) so as to generate electrical currents in the coils (5) of said modules (2).

2. A generator according to claim 1, in which the movable frame (4) of at least one of said electricity generation modules (2) has an inherent articulation axis (Y-Y) through which there are transmitted to it forces relating to the rectilinear sliding of this movable frame (4) with respect to the fixed frame (3) of this same module (2), this inherent articulation axis (Y-Y) being perpendicular to a direction of rectilinear sliding (Z) of this movable frame (4) with respect to the fixed frame (3) of the same module (2), and the distance (Dx) by which this articulation axis (Y-Y) moves away with respect to a surface (S) of the membrane facing this module (2) is at least equal to the thickness (E) of the membrane (7).

3. A generator (1) according to claim 2, in which, during the undulation of the membrane (7) in its longitudinal direction (D), the directions of rectilinear sliding (Z) of each movable frame (4) of the modules (2) are always parallel to a longitudinal cross-sectional plane (A-A) of the membrane (7) in which the longitudinal direction (D) of this membrane (7) extends.

4. A generator (1) according to any one of the preceding claims, in which at least some of the electricity generation modules (2) form a group of aligned modules (Gp1, Gp2), the electricity generation modules (2) belonging to this group of modules are connected together so that a movable frame (4) of a given module (2) in this group of modules (Gp1, Gp2) is mechanically connected to a fixed frame (3) of another given module (2) in this group (Gp1, Gp2), this connection being such that the relative movement of the fixed frames (3) of two given modules (2) thus connected together causes, for one of these modules connected together, the movement of its movable frame (4) with respect to its fixed frame (3).

5. A generator according to claim 4, in which each mechanical connection between a movable frame of a given module and a fixed frame of another given module is made by means of a part (4a) articulated on either side with the fixed (3) and movable (4) frames that it connects together.

6. A generator according to any one of claims 1 to 5, comprising at least one converter circuit (9) distant from the modules (2), at least some of the coils (5) of the modules (2) being electrically connected to the distant converter circuit (9) by means of electrical conductors and said at least one distant converter circuit (9) being arranged so as to generate, from the electrical voltages generated by at least some of the coils (5) that are connected to it, an output electrical current at the output terminals of this at least one distant converter circuit (9).

7. A generator according to any one of the preceding claims, in which the fixed frames (3) are connected to the membrane (7) by means of deformable elastic studs (15) so as to allow a relative movement between a point (15a) at which a fixed frame is connected to an elastic stud (15) that corresponds to it and a point (15b) where this same elastic stud (15) is connected to the membrane (7).

8. A generator according to any one of the preceding claims, in which the fixed frame (3) of said at least one electricity generation module (2) carries the coil (5) and said at least one permanent magnet (6) of this generation module (2), its movable frame (4) comprising a bar (16) moving facing said at least one magnet (6) when the membrane (6) undulates in its longitudinal direction (D), the bar (16) having a shape such that, during this movement of the bar (16) with respect to the magnet (6), there is an inter-bar distance (Dist) measured between the bar (16) and a counter-bar (17) carried by the fixed frame (3) that varies in alternation.

9. An electricity generator according to any one of the preceding claims, in which each of the electricity generation modules (2) has an inherent length (L) that extends parallel to a longitudinal cross-sectional plane (A-A) of the membrane (7) in which said longitudinal direction (D) of the membrane (7) is situated.

10. A generator according to the preceding claim, in which at least some of the modules (2) are aligned with each other in an alignment direction also parallel to the longitudinal cross-sectional plane of the membrane (A-A), the modules (2) aligned in the alignment direction being covered by a shroud (20) extending parallel to the longitudinal direction (D) of the membrane (7).
